# FASCICULE DE BREVET EUROPEEN

(11) **EP 3 674 205 B1**
(45) Date de publication et mention de la délivrance du brevet: **05.05.2021**
(21) Numéro de dépôt: 19202335.6
(22) Date de dépôt: 09.10.2019
(51) Int. Cl.: B64C 3/28, B64C 9/24

(54) **BEC DE BORD D'ATTAQUE À STRUCTURE OPTIMISÉE**
VORFLÜGEL MIT OPTIMIERTER STRUKTUR
LEADING EDGE SLAT WITH OPTIMISED STRUCTURE

(30) Priorité: 28.12.2018 FR 1874356
(43) Date de publication de la demande: 01.07.2020
(73) Titulaire: Daher Aerospace, 41400 Saint Julien De Chedon (FR)
(72) Inventeur: HERMEL, Pascal, 31700 BLAGNAC (FR); GAUTRAND, Luc, 31860 LABARTHE SUR LEZE (FR); BAUVIR, François, 31170 COLOMIERS (FR); CAZELLES, Arnaud, 31000 TOULOUSE (FR); CLECH, David, 31200 TOULOUSE (FR)
(74) Mandataire: Ipside

(56) Documents cités:
- EP-A1- 2 522 572
- JP-A- 2003 291 895
- US-B1- 9 708 030
- US-B2- 7 923 096

## Description

### Domaine technique

L'invention concerne un bec de bord d'attaque de voilure d'aéronef tel qu'un bec basculant de bord d'attaque, ou « *slat »,* dont la structure du bec est optimisée.

Plus particulièrement l'invention concerne une structure de raidissement d'un tel bec de bord d'attaque.

### Technique antérieure

Les becs de bord d'attaque de voilure sont présents sur un aéronef tant sur les plans horizontaux, ailes et plans horizontaux de dérive, que les plans verticaux tel que sur la dérive.

Les slats présents sur une aile d'aéronef, sont des bords d'attaque basculants qui permettent, par leur déplacement contrôlé, de modifier l'écoulement aérodynamique autour de l'aile et d'en modifier la portance à une vitesse donnée.

Un avion de transport civil comprend généralement 3 à 5 slats répartis sur les bords d'attaque des ailes, depuis l'emplanture de l'aile jusqu'au saumon, lesquels suivent l'évolution de la section de l'aile entre ses deux extrémités.

Un slat est ainsi une surface portante de la voilure qui peut récupérer, à une position d'envergure donnée, jusqu'à 30 % de la portance totale de la section de voilure.

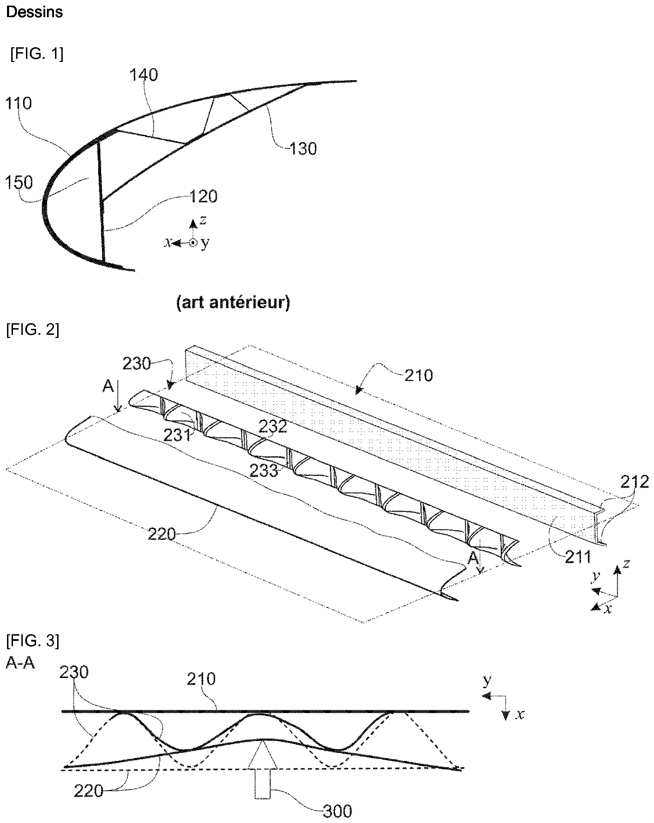

La figure 1 représente schématiquement la section, dans le plan *x-z* d'un slat selon l'art antérieur. Le système d'axe représenté est celui de l'avion le fuselage s'étend parallèlement à l'axe *x* et la voilure essentiellement selon l'axe *y*.

Un tel slat comprend une peau extrados (110) s'étendant depuis le bord d'attaque (bec) jusqu'au bord de fuite. Laquelle est, selon certains modes de réalisation, constituée de plusieurs parties.

Un longeron (120) est assemblé à la peau extrados (110) auquel sont liées des nervures.

Une peau intérieure (130) est liée à la peau d'extrados (110) par l'intermédiaire d'un système de raidissement (140) tel que des lisses, des nervures, voire une structure en nid d'abeille selon le mode de réalisation.

Plusieurs nervures réparties selon l'axe y, sont liées au longeron et à la peau extrados réalisant une structure en caisson, tant du côté du bord d'attaque que du côté du bord de fuite.

Le slat est lié à l'aile par l'intermédiaire d'une ou plusieurs ferrures d'interface (non représentées) connectées par l'intermédiaire de bras ou de rails de manœuvre à des moyens actionneur mécaniques ou hydrauliques pour réaliser le déplacement relatif contrôlé du slat par rapport à l'aile.

La structure schématiquement représentée figure 1 correspond à un exemple de construction métallique, mais les constructions en composite de l'art antérieur sont similaires.

Cette conception mécanique a peu évolué.

En termes de rigidité, un slat doit être suffisamment rigide pour résister aux efforts aérodynamiques.

Les efforts aérodynamiques subis par le slat sont transférés à la voilure via les ferrures d'interface et les rails ou bras de manœuvre qui doivent être dimensionnés en conséquence selon le nombre de ferrures.

Lorsqu'un slat est lié à l'aile par plus de deux ferrures d'interface, les différences de déformée entre l'aile et le slat produisent des surcontraintes dans les ferrures d'interface et les éléments de manœuvre, d'autant plus importantes que le nombre de ferrures d'interface est élevé.

En effet, lorsque la liaison du slat avec l'aile comprend plus de deux ferrures, ce qui est fréquent, le montage est hyperstatique. Cet hyperstatisme combiné aux différences de déformées est responsable de la moitié des efforts auxquels sont soumises lesdites ferrures et le slat, le reste provenant du chargement aérodynamique.

Ce phénomène oblige à dimensionner les ferrures d'interface et les moyens de manœuvre, en conséquence ce qui a influence sur la masse, et augmente les risques de grippage ou de coincement, qui doivent être pris en compte dans le dimensionnement.

Par ailleurs, les bords d'attaques des éléments de voilure sont exposés aux chocs, notamment aux chocs avec des oiseaux.

Dans une conception classique telle que représentée figure 1, la peau format le bec de bord d'attaque, est liée au longeron et raidie par des nervures droites (150) perpendiculaires au longeron. Selon des exemples de réalisation jusqu'à 18 nervures sont ainsi réparties selon l'axe y entre le longeron et la peau formant le bord d'attaque, formant ainsi une structure en caissons multiples.

Selon un exemple de réalisation d'un slat, chacune de ces nervures (150) pèse environ 200 grammes soit un poids total imputable à ce raidissement de l'ordre de 3,6 kg.

En cas de choc, sur le bec, ces nervures droites, très rigides génèrent un transfert direct de l'énergie d'impact vers le longeron.

La composante majoritaire de la vitesse d'impact d'un objet ou d'un oiseau sur le bord d'attaque est parallèle à l'axe x, et correspond à la vitesse de déplacement de l'aéronef.

De par la raideur importante des nervures (150) dans la direction x, ces nervures ne favorisent pas la diffusion de l'énergie d'impact. Le risque est un endommagement du longeron.

Dans le cas où le longeron est endommagé, la tenue résiduelle de la structure après impact est remise en cause.

Multiplier les nervures, outre l'augmentation de la masse, augmente la rigidité du slat et réduit sa capacité à suivre les déformations de l'aile, augmentant les efforts d'interface liés aux différences de déformation entre l'aile et le slat.

De plus, cette solution architecturale de l'art antérieur est encore plus défavorable vis-à-vis de la tenue au choc dans le cas d'une construction réalisée en matériau composite, de type de matériau présentant une capacité d'absorption d'énergie à la rupture, à rigidité égale, inférieure à celle des matériaux métalliques.

Le document US 9,708,030 décrit un bec de bord d'attaque dont la structure est optimisée pour la résistance aux impacts et comprenant des dents visant à améliorer la résistance à l'arrachement du bord d'attaque.

### Exposé de l'invention

L'invention vise à résoudre les inconvénients de l'art antérieur et concerne à cette fin un bec de bord d'attaque d'un élément de voilure d'un aéronef, ledit aéronef définissant un repère comprenant un axe principal de fuselage x et un axe d'envergure y, l'élément de voilure procurant une portance selon un axe z, comprenant une peau formant le bec de bord d'attaque, un longeron lié à ladite peau et une structure de raidissement liée côté bord d'attaque audit longeron et à la peau, dans lequel la structure de raidissement est constituée d'une tôle formée comprenant une pluralité de bossages répartis selon la longueur du bord d'attaque, lesdits bossages s'étendant entre le longeron et la face interne de la peau et dans lequel les bossages forment des dômes comportant une zone en contact avec la peau et tangent à celle-ci, les creux entre les bossages étant en contact avec le longeron et tangents à celui-ci. En comparaison de l'art antérieur, cette structure de raidissement permet de répartir l'énergie d'impact sur une plus grande surface, limitant les risques de dégradation du longeron, mais aussi dans un volume de matière plus important, rendant cette solution compatible avec une construction composite, tout en conservant une facilité d'assemblage.

L'invention est mise en œuvre selon les modes de réalisation et les variantes exposés ci-après, lesquels sont à considérer individuellement ou selon toute combinaison techniquement opérante.

Selon un exemple de réalisation, ledit bec est un bec mobile de bord d'attaque ou slat. Dans cet exemple de réalisation et en comparaison de l'art antérieur, le raidissement procuré par la structure objet de l'invention est inférieur à capacité d'absorption d'impact égal, favorisant ainsi le suivi des déformations de l'aile et limitant les contraintes d'incompatibilité de déformation.

Avantageusement, les flancs des bossages forment un angle inférieur à 90° par rapport à la surface du longeron et à la surface de la peau. L'inclinaison des flancs des bossages favorise l'absorption de l'énergie d'impact tant par la tôle de raidissement que par la peau formant le bec de bord d'attaque.

Selon un mode de réalisation, la structure de raidissement est constituée d'un matériau composite à fibres continues dans une matrice thermoplastique. Ce mode de réalisation permet d'alléger la structure, en tirant avantage de la meilleure répartition d'énergie d'impact pour permettre une construction en matériau composite.

Avantageusement, la peau formant le bec et le longeron sont également constitués d'un matériau composite à fibres continues et à matrice polymère, et la structure de raidissement est liée au longeron et à la peau par soudure. Ce mode de réalisation permet un gain de masse facilite les assemblages.

Selon un mode de réalisation particulier, le pas des bossages est variable sur la longueur du bec de bord d'attaque.

### Description sommaire des dessins

L'invention est exposée ci-après selon ses modes de réalisation préférés, nullement limitatifs, et en référence aux figures 1 à 3 dans lesquelles ;
[fig. 1] la figure 1 relative à l'art antérieur représente, selon une vue en section, un exemple schématique de réalisation d'un slat selon l'art antérieur ;
[fig. 2] la figure représente selon une vue en perspective et en éclaté, un exemple de réalisation d'un bord d'attaque selon l'invention ;
[fig. 3] et la figure 3 représente schématiquement selon un plan de coupe AA représenté figure 2, la réponse de la structure de la figure 2 au cours d'un impact, avec en pointillé la forme des éléments avant impact et en trait plein la déformation de ces éléments au cours de l'impact.

### Meilleure manière de réaliser l'invention

Figure 2, selon un exemple de réalisation, correspondant par exemple au bord d'attaque d'un slat, la structure d'un bord d'attaque selon l'invention, comprend un longeron (210) de section sensiblement en forme de U, et une peau (220), en représentation partielle sur cette figure, formant le bord d'attaque. La peau se prolonge d'une seule pièce ou en plusieurs parties assemblées, côté extrados et côté intrados.

Le longeron (210) comprend une âme (211) s'étendant dans le plan *y-z* selon ce mode de réalisation et des semelles (212) de part et d'autre de l'âme.

Le longeron (210) et la peau (220) sont liés par les semelles (212) du longeron côtés extrados et intrados par rivetage ou par soudage selon les modes de réalisation.

Selon les variantes de réalisation le longeron (210) et la peau (220) sont constitués d'un matériau métallique, par exemple un alliage d'aluminium ou sont constitués d'un composite à renfort continu dans une matrice polymère thermodurcissable ou thermoplastique.

Une structure de raidissement (230) s'étend entre la peau (220) et le longeron (210) elle est fixée d'une part à l'âme (211) du longeron et d'autre part à la face intérieure de la peau.

La structure de raidissement (230) est une tôle comprenant une pluralité de bossages (231), répartis sur la longueur, ici l'axe y, du bord d'attaque.

Chaque bossage (231) forme un dôme comportant, côté peau, une zone (232) tangente à la surface intérieure de la peau, et au creux entre deux bosses, une zone (233) tangente à la surface de l'âme (211) du longeron.

Aucun des flancs des dômes constituants les bossages (231) n'est parallèle à la normale à l'âme du longeron, de sorte qu'aucune surface desdits dôme n'est parallèle à la composante principale du vecteur vitesse, dirigé essentiellement selon l'axe x, d'un objet impactant le bord d'attaque.

Selon cet exemple de réalisation, la structure de raidissement comporte 9 dômes (231) répartis selon un pas régulier le long de l'axe *y*. Elle remplace avantageusement 9 nervures droites entre le longeron et la peau de bord d'attaque.

Alternativement, le pas des bossages est variable et préférentiellement augmente selon l'axe *y* en s'éloignant de l'emplanture de l'élément de voilure de sorte à adapter le raidissement à la rigidité dudit élément de voilure.

Selon un exemple de réalisation, la structure de raidissement est constituée d'une tôle formée en alliage d'aluminium. Une telle forme est obtenue par hydroformage, formage superplastique ou encore par formage incrémental.

A titre d'exemple non limitatif, la tôle a une épaisseur de 1 mm et pèse environ 500 grammes, représentant ainsi un gain de 1,3 kg par rapport à une solution de l'art antérieur mettant en œuvre 9 nervures droites de 200 grammes chacune.

Selon un autre mode de réalisation la structure de raidissement (230) est constituée d'un matériau composite comportant un renfort continu, par exemple sous la forme de fibres de carbone, dans une matrice polymère thermoplastique par exemple en polyétheréthercétone (PEEK).

L'utilisation d'une matrice polymère thermoplastique assure une tenue supérieure à l'impact en comparaison d'une matrice thermodurcissable.

Selon cette configuration composite, la structure de raidissement (230) est avantageusement assemblée au longeron (210) et à la peau (220) par soudure, ceux-ci étant également de structure composite.

La soudure est réalisée par ultrasons ou en portant l'ensemble à assembler à une température appropriée dans un outillage. Si l'un de la peau ou du longeron est constitué d'un composite à matrice thermodurcissable, un film thermoplastique apte à se lier avec le polymère constituant la matrice de cet élément est préalablement déposé sur les surfaces correspondant aux zones d'assemblage.

Selon un exemple de réalisation ce film est déposé par un procédé de fabrication additive selon une méthode telle que décrite dans le document EP 3 242 790.

Selon cet exemple de réalisation de la structure de raidissement en matériau composite, le pas des bossages ainsi que les angles de leurs flancs sont choisis de sorte à faciliter le passage d'une tête de placement de fibres pour leur réalisation.

Figure 3, en cas d'impact sur la structure objet de l'invention avec une direction d'impact (300) dont la composante principale est orientée selon l'axe *x*, la déformation de la peau (220) sollicite la déformation de plusieurs bossages de la structure de raidissement (230) répartissant ainsi l'énergie d'impact dans un volume de matière important et l'effort de réaction sur une surface importante du longeron (210) qui est ainsi préservé.

Du fait de l'inclinaison des flancs des bossages, plus la pénétration de l'impacteur selon *x* est importante et plus le nombre de bossages affectés par la déformation est important, augmentant d'autant plus les capacités de dissipation de l'énergie d'impact.

La déformation plastique de la peau (220) et de la structure de raidissement (230) lorsque celles-ci sont constituées d'un matériau métallique, ou leur dégradation par délaminage lorsqu'elles sont constituées d'un matériau composite, seuille l'effort transmis au longeron sur une grande distance de déplacement de l'impacteur, quasiment jusqu'à ce que celui-ci atteigne le longeron.

La description ci-avant montre que la structure de bord d'attaque selon l'invention permet à la fois : un gain de masse, une meilleure tenue à l'impact et un raidissement préservant mieux la compatibilité de déformation entre le bord d'attaque et l'élément de voilure lorsque ce bord d'attaque est mobile.

De plus, la structure objet de l'invention ouvre la possibilité de réalisation d'un bord d'attaque selon une construction composite apte à répondre aux exigences de tenue au choc.

## Revendications

1. Bec de bord d'attaque d'un élément de voilure d'un aéronef, ledit aéronef définissant un repère comprenant un axe principal de fuselage *x* et un axe d'envergure *y*, l'élément de voilure procurant une portance selon un axe *z*, comprenant une peau (220) formant le bec de bord d'attaque, un longeron (210) lié à ladite peau et une structure de raidissement (230) liée côté bord d'attaque audit longeron et à la peau, la structure de raidissement (230) étant constituée d'une tôle formée comprenant une pluralité de bossages (231) répartis selon la longueur du bord d'attaque, lesdits bossages s'étendant entre le longeron et la face interne de la peau, **caractérisé en ce que** les bossages (231) forment des dômes comportant une zone (232) en contact avec la peau et tangent à celle-ci, les creux (233) entre les bossages étant en contact avec le longeron (210) et tangents à celui-ci.

2. Bec de bord d'attaque selon la revendication 1, dans lequel ledit bec est un bec mobile de bord d'attaque ou slat.

3. Bec de bord d'attaque selon la revendication 1, dans lequel les flancs des bossages (231) forment un angle inférieur à 90° par rapport à la surface du longeron et à la surface de la peau avec lesquels ils sont en contact.

4. Bec de bord d'attaque selon la revendication 1, dans lequel la structure de raidissement (230) est constituée d'un matériau composite à fibres continues dans une matrice thermoplastique.

5. Bec de bord d'attaque selon la revendication 4, dans lequel la peau (220) formant le bec et le longeron (210) sont constitués d'un matériau composite à fibres continues dans une matrice polymère, et dans lequel la structure de raidissement (230) est liée au longeron et à la peau par soudure.

6. Bec de bord d'attaque selon la revendication 1, dans lequel le pas de répartition des bossages (231) est variable sur la longueur du bec de bord d'attaque.

## Patentansprüche

1. Vorderkantenleiste eines Flügelelements eines Flugzeugs, wobei das Flugzeug eine Markierung definiert, umfassend eine Rumpf-Hauptachse *x* und eine Spannweitenachse *y*, wobei das Flügelelement ein Tragfähigkeit gemäß eine Achse z aufweist, umfassend eine die Vorderkantenleiste formende Schale (220), einen mit der Schale verbundenen Längsträger (210) und eine an der Seite der Vorderkantenleiste mit dem Längsträger und der Schale verbundene Versteifungsstruktur (230), wobei die Versteifungsstruktur (230) aus einem geformten Blech besteht, aus einer Vielzahl von Buckeln (231) bestehend, verteilt gemäß der Länge der Vorderkante, wobei sich die Buckel zwischen dem Längsträger und der Innenseite der Schale erstrecken, **dadurch gekennzeichnet, dass** die Buckel (231) Kuppeln formen, umfassend einen Bereich (232) in Kontakt mit der Schale und diese tangierend, wobei die Hohlräume (233) zwischen den Buckeln in Kontakt mit dem Längsträger (210) sind und diesen tangieren.

2. Vorderkantenleiste nach Anspruch 1, in welcher die Leiste eine mobile Vorderkantenleiste oder -lamelle ist.

3. Vorderkantenleiste nach Anspruch 1, in welcher die Flanken der Kuppeln (231) im Verhältnis zu der Oberfläche des Längsträgers und der Oberfläche der Schale, mit denen sie in Kontakt sind, einen Winkel von weniger als 90° bilden.

4. Vorderkantenleiste nach Anspruch 1, in welcher die Versteifungsstruktur (230) aus einem Verbundmaterial aus durchgehenden Fasern in einer thermoplastischen Matrix besteht.

5. Vorderkantenleiste nach Anspruch 4, in welcher die die Leiste formende Schale (220) und der Längsträger (210) aus einem Verbundmaterial aus durchgehenden Fasern in einer Polymermatrix bestehen, und in welcher die Versteifungsstruktur (230) mit dem Längsträger und der Schale durch Verschweißung verbunden ist.

6. Vorderkantenleiste nach Anspruch 1, in welcher der Schritt der Verteilung der Kuppeln (231) entlang der Länge der Vorderkantenleiste variabel ist.

## Claims

1. A leading-edge slat of a wing element of an aircraft, said aircraft defining a mark comprising a main fuselage axis *x* and a span wise axis *y,* with the wing element procuring a lift along an axis *z,* comprising a skin (220) forming the leading edge slat, a spar (210) linked to said skin and a stiffening structure (230) linked on the leading edge side to said spar and to the skin, the stiffening structure (230) being formed from a formed sheet metal comprising a plurality of bosses (231) distributed according to the length of the leading edge, said bosses extending between the spar and the inner face of the skin, **characterized in that** the bosses (231) form domes that comprise a zone (232) in contact with the skin and tangent to the latter, the hollows (233) between the bosses being in contact with the spar (210) and tangent to the latter.

2. The leading-edge slat according to claim 1, wherein said slat is a movable leading-edge slat.

3. The leading-edge slat according to claim 1, wherein the flanks of the bosses (231) form an angle less than 90° in relation to the surface of the spar and to the surface of the skin with which they are in contact.

4. The leading-edge slat according to claim 1, wherein the stiffening structure (230) is formed from a composite material with continuous fibers in a thermoplastic matrix.

5. The leading-edge slat according to claim 4, wherein the skin (220) forming the slat and the spar (210) are formed from a composite material with continuous fibers in a polymer matrix, and wherein the stiffening structure (230) is linked to the spar and to the skin by welding.

6. The leading-edge slat according to claim 1, wherein the distribution pitch of the bosses (231) is variable over the length of the leading-edge slat.
